# EUROPEAN PATENT SPECIFICATION

(11) **EP 1 816 881 B1**
(45) Date of publication and mention of the grant of the patent: **05.09.2012**
(21) Application number: 07002202.5
(22) Date of filing: 01.02.2007
(51) Int. Cl.: H04W 52/02

(54) **Remote control device, communication network system and remote control method**
Fernsteuervorrichtung, Kommunikationsnetzsystem und Fernsteuerverfahren
Dispositif de commande à distance, système de réseau de communication et procédé de commande à distance

(30) Priority: 01.02.2006 JP 2006024819
(43) Date of publication of application: 08.08.2007
(73) Proprietor: NTT DoCoMo, Inc., Tokyo 100-6150 (JP)
(72) Inventor: Sasao, Nobuaki c/o I.P.D., NTT DoCoMo Inc., Chiyoda-ku Tokyo 100-6150 (JP)
(74) Representative: Viering, Jentschura & Partner

(56) References cited:
- EP-A1- 1 578 095
- US-A1- 2002 039 896
- US-B1- 6 687 497

## Description

### BACKGROUND OF THE INVENTION

### Field of the Invention

The present invention relates to a remote control device, a communication network system, and a remote control method and, more particularly, to a remote control device, a communication network system, and a remote control method for a communication terminal capable of performing radio communication by a plurality of communication systems.

### Related Background of the Invention

Conventionally, a mobile phone is known, which functions as a communication terminal capable of radio communication by a plurality of communication systems by including a plurality of communication means so as to be capable of utilizing, in addition to radio communication using the conventional mobile phone network, radio communication using other communication systems such as a wireless LAN (Local Area Network).

It is necessary for such a mobile phone to keep the power supply (electrical power supply) of a wireless LAN communication portion relating to a wireless LAN capability turned on to make a connection to a base station (hereinafter, referred to as an "access point") of the wireless LAN. In this case, compared to a base station of the mobile phone network, the number of locations at which the access points of the wireless LAN are installed is limited and a communication area covered by one access point is narrow, and therefore, the power supply of the wireless LAN communication portion is continuously turned on even at the location where radio communication using the wireless LAN is not available, and thus wasteful power is consumed in the mobile phone.

In order to solve this, for a mobile phone described in Japanese Patent Application Laid-Open No. 2005-229399 (with publication number JP 2005229399), it is possible to control the power supply of the wireless LAN communication portion based on the result of a determination made as to whether or not the mobile phone is located within a communication area capable of communication with an access point of the wireless LAN based on location information by the GPS (Global Positioning System) and location information obtained from a base station of the mobile phone network. Due to this, it is possible to suppress wasteful power consumption by turning off the power supply of the wireless LAN communication portion when the location of the mobile phone is outside the communication area of the access point.

In Japanese Patent Application Laid-Open No. 2004-48550 (with publication number JP 2004048550), a mobile phone capable of radio communication using two mobile phone networks of different systems is described. According to this, it is possible for the mobile phone to suppress wasteful power consumption by determining, based on the location registration information of one communication system, whether the mobile phone is located within or outside the communication area (service area) of the other communication system to turn off the power supply of the communication portion used for the other communication system when the mobile phone is outside a communication-allowed area. In EP 1 578 095 Al a method for controlling sleep mode in a terminal including two network interfaces is disclosed, wherein one of the two interfaces is switched off, and the switched off interface is activated for a predefined time window upon reception of a predefined signaling message on the other interface.

### SUMMARY OF THE INVENTION

However, in the inventions described in Japanese Patent Application Laid-Open No. 2005-229399 and Japanese Patent Application Laid-Open No. 2004-48550, when the power supply of the communication portion is controlled, the mobile phone acquires the location information, acquires information about the communication area, and determines whether it is within or outside the communication area, and therefore, the load accompanying these processes is imposed on the mobile phone. In addition, it is necessary for the mobile phone to include a specific configuration having a storage means and a determination means for processing the communication-allowed area information.

An object of the present invention is to provide a remote control device, a communication network system, and a remote control method capable of reducing wasteful power consumption in a communication terminal, by controlling the power supply of the communication means with a simple configuration without increasing the load of processing so much in the communication terminal capable of radio communication by multiple communication systems with multiple communication means.

In order to solve the above-described problems, a remote control device of the present invention remotely controls a communication terminal including a first communication means for performing radio communication by a first communication system and a second communication means for performing radio communication by a second communication system. The remote control device comprises: a terminal location storage means for storing terminal location information on a location of the communication terminal; an area storage means for storing area information on a plurality of communication-allowed areas where the communication terminal is allowed to perform radio communication via the second communication means; a determination means for determining whether or not to allow radio communication by the communication terminal via the second communication means based on the terminal location information stored in the terminal location storage means and the area information stored in the area storage means; and a terminal power supply control means for controlling the communication terminal in order to establish a state that the second communication means of the communication terminal consumes less power when the determination means determines not to allow radio communication via the second communication means, wherein the terminal power supply control means directs the communication terminal to control the power supply via the first communication means of the communication terminal so that power consumption of the second communication means is reduced when the determination means determines not to allow radio communication via the second communication means.

According to the present invention, the determination process necessary to control the power supply of the second communication means of the communication terminal is executed by the remote control device. Consequently, when the power supply of the second communication means is controlled in order to reduce the wasteful power consumption in the communication terminal, no load resulting from the determination process is imposed on the communication terminal. Further, since it is not necessary for the communication terminal to execute the determination process, the communication terminal can have a simple configuration.

The terminal power supply control means directs the communication terminal to control the power supply via the first communication means of the communication terminal so that power consumption of the second communication means is reduced when the determination means determines not to allow radio communication via the second communication means. With such a configuration, when the second communication means is controlled so that the power consumption is reduced, it is possible to reduce the power consumption of the second communication means without imposing a specific load on the communication terminal.

Further, in the above-mentioned remote control device, the terminal power supply control means directs the communication terminal to turn on the power supply of the second communication means via the first communication means of the communication terminal when the determination means determines to allow radio communication via the second communication means. With such a configuration, even when the second communication means is controlled so that its power consumption is reduced in order to reduce the wasteful power consumption in the communication terminal, it is possible to turn on the power supply of the second communication means without imposing a specific load on the communication terminal.

In addition, in the above-mentioned remote control device, the determination means may allow radio communication via the second communication means of the communication terminal when the location of the communication terminal is within a communication-allowed area where the communication terminal is allowed to perform radio communication via the second communication means. With such a configuration, since it is possible to control the power supply depending on whether or not the communication terminal is located at the location where radio communication via the second communication means is available, more accurate control can be performed. In addition, since it is not necessary for the communication terminal to store the communication-allowed area information, the communication terminal can have a simple configuration.

In addition, the determination means does not allow the communication terminal to perform radio communication via the second communication means when the number of communication-allowed terminals that are allowed to perform radio communication by the second communication system within the communication-allowed area is greater than a first predetermined number. With such a configuration, it is possible to control the power supply of the second communication means in accordance with not only the location of the communication terminal but also the number of communication-allowed terminals. For example, when communication is difficult due to the crowded radio waves because many communications allowed terminals exist within the same communication-allowed area, it is possible to further reduce the wasteful power consumption by the communication terminal by controlling the power supply of the second communication means of the communication terminal.

In addition, the determination means may determine whether or not the location of the communication terminal is within a specific communication-allowed area formed inside the communication-allowed area and does not allow radio communication via the second communication means when the number of communication-allowed terminals that are located within the specific communication-allowed area is greater than a second predetermined number. With such a configuration, it is possible to control the power supply based on the detail determination based on the specific communication-allowed area narrower in the range than the communication-allowed area. Consequently, for example, even when the communication-allowed terminals gather in an unbalanced manner in a part of the communication-allowed area, it is possible to properly control the power supply of the second communication means of the communication terminal by continuously turning on the power supply when the number of communication-allowed terminals within the specific communication-allowed area is small.

The present invention can be described as an invention relating to a remote control device as mentioned above, as well as an invention relating to a communication network system and an invention relating to a remote control method, as follows.

The communication network system of the present invention comprises a communication terminal and a remote control device that remotely controls the plurality of communication terminals. The communication terminal includes:
a first communication means for performing radio communication by a first communication system; and a second communication means for performing radio communication by a second communication system. The remote control device includes: a terminal location storage means for storing terminal location information on a location of the communication terminal; an area storage means for storing area information on a plurality of communication-allowed areas where the communication terminal is allowed to perform radio communication via the second communication means; a determination means for determining whether or not to allow radio communication by the communication terminal via the second communication means based on the terminal location information stored in the terminal location storage means and the area information stored in the area storage means; and a terminal power supply control means for directing the communication terminal to control the power supply via the first communication means of the communication terminal so that power consumption of the second communication means is reduced when the determination means determines not to allow radio communication via the second communication means.

Further, the remote control method of the present invention remotely controls a communication terminal including a first communication means for performing radio communication by a first communication system and a second communication means for performing radio communication by a second communication system with a remote control device. The remote control method comprises: storing terminal location information on a location of the communication terminal; storing area information on a plurality of communication-allowed areas where the communication terminal (20) is allowed to perform radio communication via the second communication means; determining whether or not to allow radio communication by the communication terminal via the second communication means based on the stored terminal location information and the stored area information; and directing the communication terminal to control a power supply via the first communication means of the communication terminal so that power consumption of the second communication means is reduced when it is determined that the radio communication via the second communication means is not allowed.

The invention relating to the communication network system and the remote control method mentioned above has the technical features corresponding to the invention relating to the above-mentioned remote control device and is an invention having the same function and effect.

### BRIEF DESCRIPTION OF THE DRAWINGS

Fig. 1 is a conceptual diagram of a communication network system including a remote control device according to an embodiment of the present invention.

Fig. 2 is a general configuration diagram of the communication network system shown in Fig. 1.

Fig. 3 is a flow chart showing the operation of the remote control device according to the embodiment of the present invention.

Fig. 4 is a flow chart showing a modification example of the operation of the remote control device according to the embodiment of the present invention.

Fig. 5 is a flow chart showing another modification example of the operation of the remote control device according to the embodiment of the present invention.

### DESCRIPTION OF THE PREFERRED EMBODIMENTS

Embodiments of a remote control device, communication network system, and remote control method according to the present invention will be described below with reference to drawings.

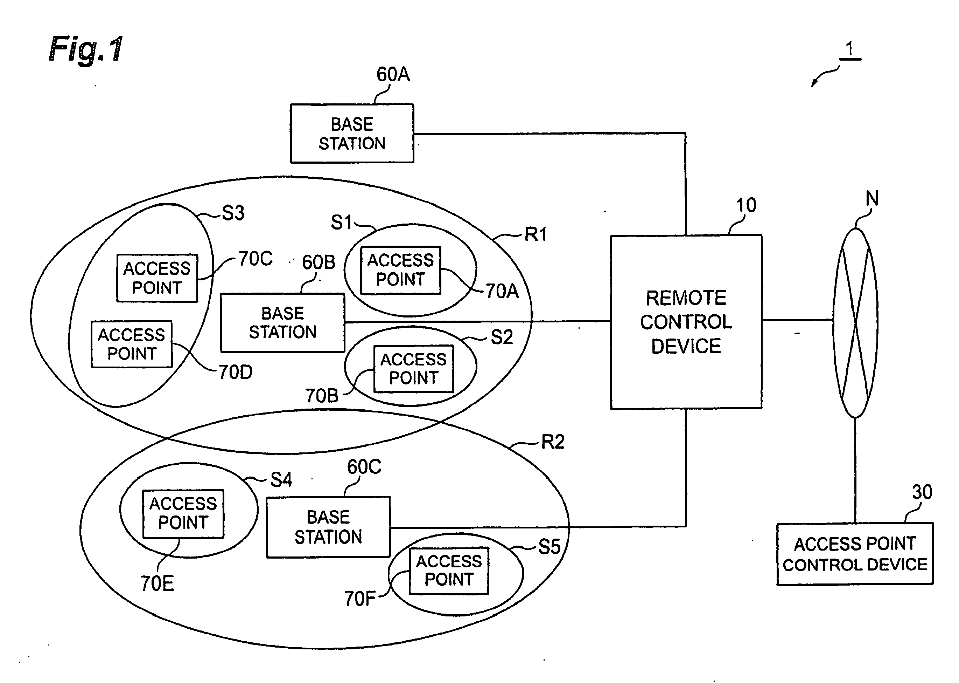

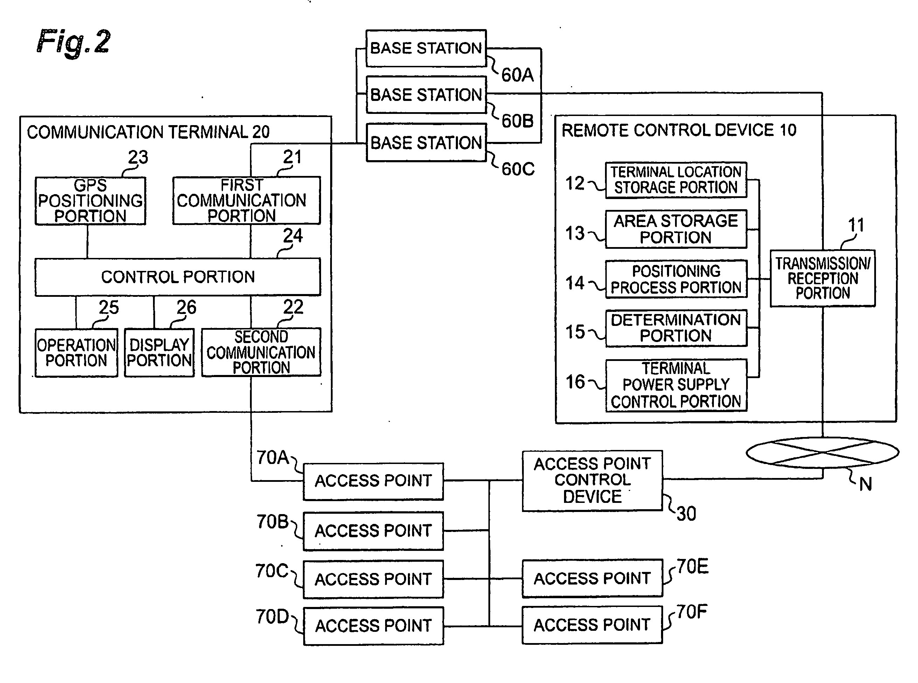

Fig. 1 is a conceptual diagram of a communication network system including a remote control device 10 and Fig. 2 is a general configuration diagram of the communication network system.

A communication network system 1 according to the present invention comprises a plurality of communication terminals (including a communication terminal 20 shown in Fig. 2) and the remote control device 10 that remotely controls the plurality of communication terminals. Hereinafter, the configuration of the communication network system will be described by taking the case where the communication terminal 20 is an object to be controlled as an example.

The remote control device 10 is provided on a mobile phone network consisting of a plurality of base stations and devices such as an exchange, not shown, and configured so as to be capable of information communication mutually with the communication terminal 20 via base stations 60A to 60C. The remote control device 10 is also connected to an information communication network N connected to a wireless LAN service network and is configured so as to be capable of information communication mutually with an access point control device 30 equipped with functions, such as a data transmission/reception control for access points (base stations) 70A to 70F of the wireless LAN.

The communication terminal 20 to be controlled by the remote control device 10 is one capable of utilizing a plurality of communication systems including the wireless LAN communication system. The communication terminal 20 shown in Fig. 2 has the mobile phone function based on a first communication system via a first communication portion 21 and the wireless LAN function based on a second communication system via a second communication portion 22. Such communication terminals include a mobile phone, PDA (Personal Digital Assistance), and personal computer.

As shown in Fig. 1, the base stations 60B and 60C have communication-allowed areas R1 and R2, respectively. The communication-allowed areas R1 and R2 are areas which allow the communication terminal 20 to perform radio communication by the wireless LAN communication system (the second communication system) different from the communication system for mobile phone network (the first communication system). The first communication systems include, for example, "W-CDMA (Wideband Code Division Multiple Access)" and "GSM (Global System for Mobile Communications)" and the second communication systems include, for example, the standard such as "IEEE 802. 11a", "IEEE 802. 11b", and "IEEE 802. 11g" .

The communication-allowed areas R1 and R2 are defined so as to coincide with a communication area (hereinafter, referred to as a "cell", thereby this is distinct from the communication area of the access point) in which one base station is capable of communicating with the communication terminal 20. Because of this, as shown in Fig. 1, there appears an area in which the communication-allowed areas R1 and R2 overlap each other in a place in which a plurality of base stations exists. Further, the cell of the base station is generally wider than the communication area of the access point and therefore there exists a place in which communication is not available with any access point even if the location of the communication terminal 20 is inside the communication-allowed areas R1 and R2. For the base station 60A around which no access point exists, the communication-allowed area is not set.

Inside the communication-allowed areas R1 and R2, specific communication-allowed areas S1 to S5 are formed. The specific communication-allowed areas S1 to S5 are areas set in order to control the power supply (more specifically, electrical power supply) of the second communication portion 22 of the communication terminal 20 by referring to the location of the communication terminal 20 obtained by the detail location measurement to be described later. The specific communication-allowed areas S1 to S5 are defined so as to overlap at least a part of the communication area (not shown) of the access point, but do not necessarily coincide with the communication area of the access point. For example, like the specific communication-allowed area S3, it may also be possible to define a specific communication-allowed area that contains the communication area of two or more access points.

Next, the components constituting the communication network system 1 and their functions will be described with reference to Fig. 2. Similar to the description of the configuration of the above-described communication network system, each component and its function will be described by taking the case where the communication terminal 20 is an object to be controlled as an example.

First, the components constituting the remote control device 10 and their functions will be described. The remote control device 10 includes, as functional components, a transmission/reception portion 11, a terminal location storage portion 12, an area storage portion 13, a positioning process portion 14, a determination portion (determination means) 15, and a terminal power supply control portion (terminal power supply control means) 16, and remotely controls a plurality of communication terminals including the communication terminal 20.

The transmission/reception portion 11 is a portion that transmits/receives data to/from the base stations 60A to 60C and the access point control device 30. Specifically, the transmission/reception portion 11 receives information about the communication terminal within the cell of the base station, data about the positioning of the communication terminal 20, etc., from the base stations 60A to 60C and outputs them to the terminal location storage portion 12, the positioning process portion 14, the determination portion 15, and the terminal power supply control portion 16. The transmission/reception portion 11 also transmits the direction signal input from the positioning process portion 14, the determination portion 15, or the terminal power supply control portion 16 to the base stations 60A to 60C or the access point control device 30.

The terminal location storage portion 12 is a portion that stores the location of the communication terminal to be controlled including the communication terminal 20 and outputs information about the location of the communication terminal in response to the direction of the determination portion 15. Normally, the terminal location storage portion 12 stores the location of the communication terminal in association with the cell formed by the base stations 60A to 60C, respectively. Here, when the communication system for the mobile phone network (the first communication system) of the communication terminal 20 is W-CDMA, the communication terminal 20 can communicate with two or more base stations simultaneously. However, the location determined based on the location of the base station with which the communication terminal 20 communicates (for example, the location of the base station to which the communication terminal 20 belongs or the representative point within the area formed by the cells of the two or more base stations) is stored as the location of the communication terminal 20. In other words, the result of the positioning based on the information of the cell of the base station is taken as the location of the terminal. In addition, it is possible for the terminal location storage portion 12 to store the location of the communication terminal 20 found by the positioning process portion 14 to be described later instead of the location of such a base station in response to the direction of the determination portion 15.

The area storage portion 13 is a portion that stores the communication-allowed areas R1 and R2 and the specific communication-allowed areas S1 to S5 and outputs the stored information in response to the direction of the determination portion 15. The communication-allowed areas R1 and R2 and the specific communication-allowed areas S 1 to S5 stored by the area storage portion 13 are defined by parameters that specify the geometry of the area including the center coordinates (latitude and longitude), the radius, etc. of the area. The communication-allowed areas R1 and R2 and the specific communication-allowed areas S1 to S5 may be defined by an area calculated from the intensity of radio wave.

The positioning process portion 14 is a portion that executes positioning of the position of the communication terminal 20 to be stored by the terminal location storage portion 12. As described above, on the assumption that the location determined based on the location of the base station to communicate with is the location of the communication terminal 20, the positioning process portion 14 executes positioning of the location of the communication terminal 20 by a method called the cell based positioning system in which positioning is executed using the information of the cell of the base station. In addition, the positioning process portion 14 can execute the detail positioning of the communication terminal 20 by means of the positioning based on the synchronization signals from three or more base stations (multiple base stations positioning system) or the positioning by a GPS positioning portion 23 of the communication terminal 20 (GPS system) to be described later, in addition to the cell based positioning system. The detail positioning of the communication terminal 20 by the multiple base stations positioning system or the GPS system is executed in response to the direction of the determination portion 15 to be described later.

The determination portion 15 is a portion that executes a process required for the determination as to whether or not to allow radio communication by the communication terminal 20 using the wireless LAN communication system (the second communication system) when a predetermined time elapses after the remote control device 10 executes the process for the communication terminal 20 as an object to be controlled, or when the base station whose reception level of the radio wave transmitted from the communication terminal 20 is the highest is changed to another, and outputs the determination result to the terminal power supply control portion 16. Upon receipt of the location information output from the terminal location storage portion 12, the determination portion 15 determines whether or not the location of the communication terminal 20 is within the communication-allowed area that allows performing radio communication via the communication portion by the wireless LAN communication system (in the example of Fig. 1, inside R1 or R2).

Specifically, the determination portion 15 determines whether or not the location coordinates (for example, latitude and longitude) of the communication terminal 20 (that is, the base station assumed to be the location of the communication terminal 20) are inside the communication-allowed area R1 or R2. Then, when the location of the communication terminal 20 is inside the communication-allowed area R1 or R2, the determination portion 15 determines to allow radio communication using the wireless LAN communication system via the second communication portion 22, but determines not to allow radio communication via the second communication portion 22 when the location of the communication terminal 20 is outside the communication-allowed area R1 or R2. The determination portion 15 outputs the determination result to the effect that radio communication via the second communication portion 22 is allowed or not allowed to the terminal power supply control portion 16.

It is preferable to configure the determination portion 15 so as to make determination as follows in addition to the determination as to whether or not the location of the communication terminal 20 is within the communication-allowed area that allows performing radio communication via the communication portion by the wireless LAN communication system.

Firstly, it is preferable to configure the determination portion 15 so as to first determine, when having determined that the location of the communication terminal 20 is inside the communication-allowed area R1 or R2, whether or not the number of communication-allowed terminals that are allowed to perform radio communication by the wireless LAN communication system within the communication-allowed areas R1 and R2 is greater than a predetermined number (hereinafter, referred to as a first predetermined number), and output the corresponding determination result to the terminal power supply control portion 16. When determining as to the number of communication-allowed terminals, the determination portion 15 determines to allow radio communication using the wireless LAN communication system when the number of communication-allowed terminals is equal to or less than the predetermined number, and determines not to allow radio communication using the wireless LAN communication system when the number of communication-allowed terminals is greater than the predetermined number.

Here, the communication-allowed terminals may include all of the communication terminals for which radio communication by the wireless LAN communication system is allowed, not limited to the communication terminals that are the objects of the remote control (for example, the mobile phone and the communication terminal having the mobile phone function). In this case, the number of communication terminals having only the wireless LAN function is included in the number of communication-allowed terminals.

The number of communication-allowed terminals can be grasped as the number of communication-allowed terminals existing within the cell of one base station or the total number of communication-allowed terminals actually connected to the access points within the communication-allowed area. Specifically, in the former case, the determination portion 15 makes determination by comparison with the predetermined number using the number of communication-allowed terminals that can be connected to the access points of the wireless LAN within the cell (communication-allowed area) of one base station (in this case, the communication terminal not located within the communication area of the access points is included as a result). In the latter case, the determination portion 15 makes determination by comparison with the predetermined number by grasping the total number of communication-allowed terminals that are actually connected to each access point existing within one communication-allowed area via the access point control device 30 and by using the number as the number of communication-allowed terminals.

The first predetermined number is not particularly limited, however, it is preferable to set the first predetermined number so as to be equal to the total of the allowable number of communication terminals capable of connecting to the access points within the communication-allowed area.

Secondly, it is preferable to configure the determination portion 15 so as to determine, when having determined that the number of communication-allowed terminals is greater than the first predetermined number, whether or not the location of the communication terminal 20 is inside any one of the specific communication-allowed areas S1 to S5 formed inside the communication-allowed area R1 or R2, determine whether or not the number of communication-allowed terminals that are located within the specific communication-allowed area is greater than a predetermined number (hereinafter, referred to as the second predetermined number), and output the corresponding determination result to the terminal power supply control portion 16. The determination based on the specific communication-allowed area and the second predetermined number is made by the procedure similar to that of the determination based on the communication-allowed area and the first predetermined number. That is, when the communication terminal that is the object of the remote control is located inside any one of the specific communication-allowed areas S1 to S5 and the number of communication-allowed terminals is equal to or less than the second predetermined number, the determination portion 15 determines to allow radio communication using the wireless LAN communication system and otherwise, determines not to allow radio communication using the wireless LAN communication system.

In the determination based on any one of the specific communication-allowed areas S1 to S5 also, as with the case of the communication-allowed area R1 or R2, it is possible to grasp the number of communication-allowed terminals as the number of communication-allowed terminals existing within the cell of one base station or the total number of communication-allowed terminals actually connected to the access points within the specific communication-allowed area.

As with the case of the first predetermined number, the second predetermined number is not particularly limited, however, it is preferable to set the second predetermined number so as to be equal to the total of the allowable number of communication terminals capable of connecting to the access points within the specific communication-allowed area.

Further, it is preferable to configure the determination portion 15 so as to determine the power supply state of the communication terminal that is the object of the control using the information stored in the terminal power supply control portion 16 to be described later.

The terminal power supply control portion 16 is a portion that directs the communication terminal to control the power supply (more specifically, electrical power supply) of the communication portion by the wireless LAN communication system in the communication terminal upon receipt of the determination result output from the determination portion 15.

The terminal power supply control portion 16 generates the control signal that directs the communication terminal to control the power supply of the communication portion corresponding to the wireless LAN communication system and transmits the signal to the communication portion corresponding to the communication system for mobile phone network via the transmission/reception portion 11 and any one of the base stations 60A to 60C.

Specifically, when the communication terminal 20 is the object of the remote control and when the determination portion 15 determines not to allow radio communication via the second communication portion 22, the terminal power supply control portion 16 transmits the control signal to the communication terminal 20 via the first communication portion 21 of the communication terminal 20, which control signal directs to control the power supply so that the power consumption in the second communication portion 22 is reduced. The control of the power supply to reduce the power consumption of the second communication portion 22, in other words, the control of the power supply to reduce the power consumption includes, for example, a control to turn off the power supply of the second communication portion 22 and a control to shift the second communication portion 22 into a power saving mode, in which the second communication portion 22 is in a standby state. That is, the terminal power supply control portion 16 controls the communication terminal 20 in order to establish a state that the second communication portion 22 consumes less power when the determination portion 15 determines not to allow radio communication via the second communication portion 22.

In addition, when the determination portion 15 determines to allow radio communication via the second communication portion 22, the terminal power supply control portion 16 transmits the control signal to direct to turn on the power supply of the second communication portion 22 to the communication terminal 20 via the first communication portion 21 of the communication terminal 20.

When the remote control device 10 is configured so as to execute a process in accordance with the power supply state of the communication terminal to be controlled, in addition to the above-mentioned process, it is preferable to configure the terminal power supply control portion 16 so as to be capable of storing the power supply state of the communication portion by the wireless LAN communication system in the communication terminal (specifically, whether the power supply is turned on or off, and whether or not the mode is the power saving mode in which the communication portion is in the standby state) and of outputting information about the power supply state to the determination portion 15. With such a configuration, it is possible for the terminal power supply control portion 16 to omit the generation and transmission of the control signal when directing the second communication portion 22 to control into the same state as the stored power supply state.

With such a configuration, the remote control device 10 described above executes a determination process necessary to control the power supply of the communication portion (the second communication portion 22) corresponding to the wireless LAN communication system of the communication terminal (for example, the communication terminal 20) to be controlled. Further, it is possible to control the power supply of the communication portion by transmitting the control signal in accordance with the result of the determination process to the communication terminal.

Next, the components constituting the communication terminal 20 and their functions will be described. In the present embodiment, the case where the communication terminal 20 is a mobile phone equipped with the mobile phone function and the wireless LAN function will be described as an example.

The communication terminal 20 includes, as functional components, the first communication portion (the first communication means) 21, the second communication portion (the second communication means) 22, the GPS positioning portion 23, a control portion 24, an operation portion 25, and a display portion 26.

The first communication portion 21 is a portion that transmits/receives data by radio communication with the base station by the communication system for mobile phone network (the first communication system). The first communication portion 21 is configured so as to be capable of communicating simultaneously with two or more of the base stations 60A to 60C when in the range in which radio wave reaches the communication terminal 20.

In addition, the first communication portion 21 receives the control signal to direct to control the power supply of the second communication portion 22 from the terminal power supply control portion 16 via any one of the base stations 60A to 60C and the transmission/reception portion 11 of the remote control device 10 and outputs the signal to the control portion 24.

The second communication portion 22 is a portion that executes transmission/reception of data by radio communication with any one of the access points 70A to 70F by the wireless LAN communication system (the second communication system). The second communication portion 22 is configured so as to be capable of performing radio communication with an access point capable of communication when the communication terminal 20 is located within the communication area of any one of the access points 70A to 70F. Fig. 2 shows a state in which the communication terminal 20 is located within the communication area of the access point 70A and is capable of communication with the access point 70A.

In addition, the second communication portion 22 is configured so as to be capable of receiving the control signal input to the control portion 24 from the terminal power supply control portion 16 of the second communication portion 22 and of turning on and off the power supply and shifting into the power saving mode by the direction of the control portion 24.

The GPS positioning portion 23 is a portion that executes positioning of the location of the communication terminal 20 upon receipt of the GPS signal from the satellite. The GPS positioning portion 23 is configured so as to be capable of receiving the direction by the positioning process portion 14 of the remote control device 10, outputting the positioning result to the control portion 24, and transmitting the result of the detail positioning to the positioning process portion 14.

The control portion 24 is a portion that controls the operation of the communication terminal 20 while executing various data processing and the input/output of the signal with each component in the communication terminal 20. The control portion 24 is configured so as to be capable of executing a predetermined process for the synchronization signals transmitted from the base stations 60A to 60C to the first communication portion 21 and of transmitting the processed signals from the first communication portion 21 to the positioning process portion 14 of the remote control device 10 via the base stations 60A to 60C in order to execute positioning of the communication terminal by the above-described multiple base stations positioning system. In addition, the control portion 24 is configured so as to be capable of transmitting the positioning result by the GPS positioning portion 23 to the positioning process portion 14 of the remote control device 10 as the result of the detail positioning via the first communication portion 21 in order to execute positioning of the communication terminal by the above-described GPS system.

The operation portion 25 is a portion for a user to operate the communication terminal 20 and configured by numeric keys, a cross key, etc., not shown schematically. The user can perform information communication utilizing the mobile phone function and the wireless LAN function by operating the communication terminal 20 using the operation portion 25. In addition, the display portion 26 is a portion that displays the operation state of the communication terminal 20 etc. and the user can confirm the contents of the data received from the base station or the access point and the contents of the data transmitted to the outside by confirming the contents displayed on the display portion 26.

With such a configuration, the above-described communication terminal 20 can execute information communication utilizing the mobile phone network via the first communication portion 21 and can execute information communication utilizing the wireless LAN via the second communication portion 22. In addition, the communication terminal 20 can control the power supply of the second communication portion 22 upon receipt of the control signal from the terminal power supply control portion 16 of the remote control device 14.

The access point control device 30 is a device that connects the access points 70A to 70F and the information communication network N, having functions, such as the data transmission/reception control for the access points 70A to 70F of the wireless LAN. In addition, the access point control device 30 is configured so as to be capable of transmitting the number of communication terminals connected to the respective access points 70A to 70F in response to the request by the determination portion 15 of the remote control device 10.

The base stations 60A to 60C are devices that connect the communication terminal 20 and the mobile phone network in the communication network system 1, performing information communication with the first communication portion 21 of the communication terminal 20.

The access points 70A to 70F are devices that connect the communication terminal 20 and the information communication network N via the access point control device 30 in the communication network system 1, performing information communication with the second communication portion 22 of the communication terminal 20.

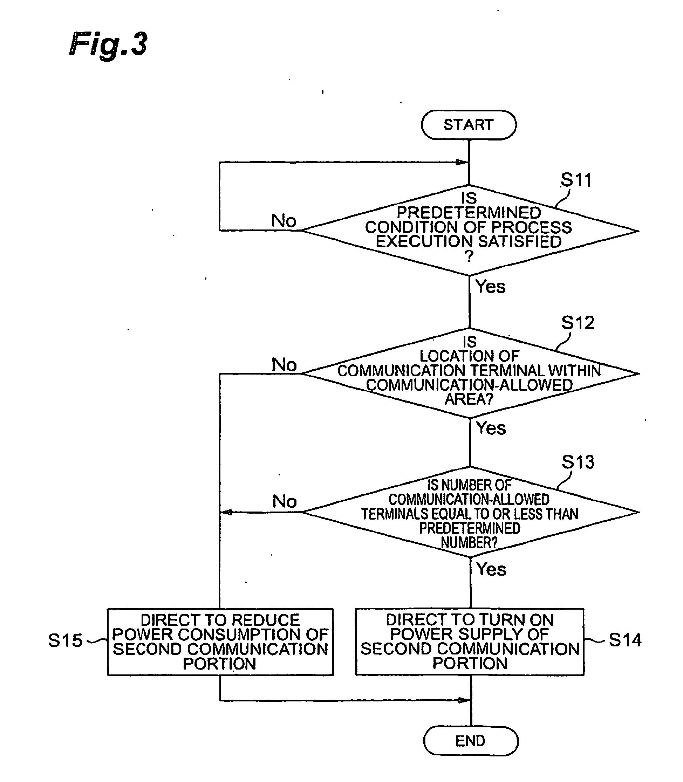

Next, a remote control method according to the embodiment of the present invention will be described with reference to Fig. 3 to Fig. 5. In the following, the remote control method according to the present embodiment will be described by taking the case as an example, where the communication terminal 20 including the first communication portion 21 that performs radio communication by the first communication system and the second communication portion 22 that performs radio communication by the second communication system is controlled remotely. The same steps are assigned with the same symbols and duplicated explanation is omitted adequately.

Fig. 3 is a flow chart showing the operation of the remote control device 10 according to the embodiment of the present invention.

First, the determination portion 15 of the remote control device 10 determines whether or not the state of the communication terminal 20 satisfies a predetermined condition of process execution (S11). Specifically, when a predetermined time elapses after the remote control device 10 executes the process for the communication terminal 20 as an object to be controlled, or when the base station whose reception level of the radio wave transmitted from the communication terminal 20 is the highest is changed to another, the determination portion 15 determines that the predetermined condition is satisfied. When the predetermined condition is not satisfied, the process in S 11 is repeated.

When determining that the predetermined condition is satisfied (when Yes in S11), the determination portion 15 determines whether or not the current location of the communication terminal 20 is within the communication-allowed area based on the information obtained from the terminal location storage portion 12 and the area storage portion 13. (S12). Specifically, when the base station whose reception level of the radio wave transmitted from the communication terminal 20 is the highest has the communication-allowed area (for example, the communication-allowed areas R1 and R2), the determination portion 15 determines that the current location of the communication terminal 20 is within the communication-allowed area and otherwise, the determination portion 15 determines that the current location of the communication terminal 20 is outside the communication-allowed area.

When determining that the current location of the communication terminal 20 is within the communication-allowed area (when Yes in S12), the determination portion 15 determines whether the number of communication-allowed terminals that are allowed to perform radio communication by the second communication system within the communication-allowed area is equal to or less than the first predetermined number, or greater than the first predetermined number (S13).

When determining that the number of communication-allowed terminals is equal to or less than the first predetermined number (when Yes in S 13), the determination portion 15 outputs the determination result that radio communication of the communication terminal 20 via the second communication portion 22 is allowed to the terminal power supply control portion 16. Upon receipt of the input of the determination result, the terminal power supply control portion 16 outputs the control signal to turn on the power supply of the second communication portion 22 and transmits the signal to the communication terminal 20 via the transmission/reception portion 11 and the base station, and thereby the terminal power supply control portion 16 directs the communication terminal 20 to turn on the power supply of the second communication portion 22 (S 14) and terminates the process.

On the other hand, when determining that the current location of the communication terminal 20 is outside the communication-allowed area (when No in S 12), or when determining that the number of communication-allowed terminals is greater than the first predetermined number in S 13 (when No in S 13), the determination portion 15 outputs the determination result that radio communication by the communication terminal 20 via the second communication portion 22 is not allowed to the terminal power supply control portion 16. Upon receipt of the input of the determination result, the terminal power supply control portion 16 outputs the control signal to direct to turn off the power supply of the second communication portion 22 or to shift into the power saving mode and transmits the signal to the communication terminal 20, thereby the terminal power supply control portion 16 directs the communication terminal 20 to control the power supply so that the power consumption of the second communication portion 22 is reduced (S15) and terminates the process. In other words, when the determination portion 15 determines not to allow radio communication via the second communication portion 22, the terminal power supply control portion 16 executes the control to establish a state of less power consumption of the second communication portion 22.

Due to such a process, it is possible to remotely control by the remote control device 10 the communication terminal 20 including the first communication portion 21 that performs radio communication by the first communication system and the second communication portion 22 that performs radio communication by the second communication system. It may also be possible for the remote control device 10 to omit the determination process based on the number of communication-allowed terminals that are located within the communication-allowed area in S 13 but to execute the process in S14 or S 15 in accordance with the determination result of the determination portion 15 immediately after the process in S 12.

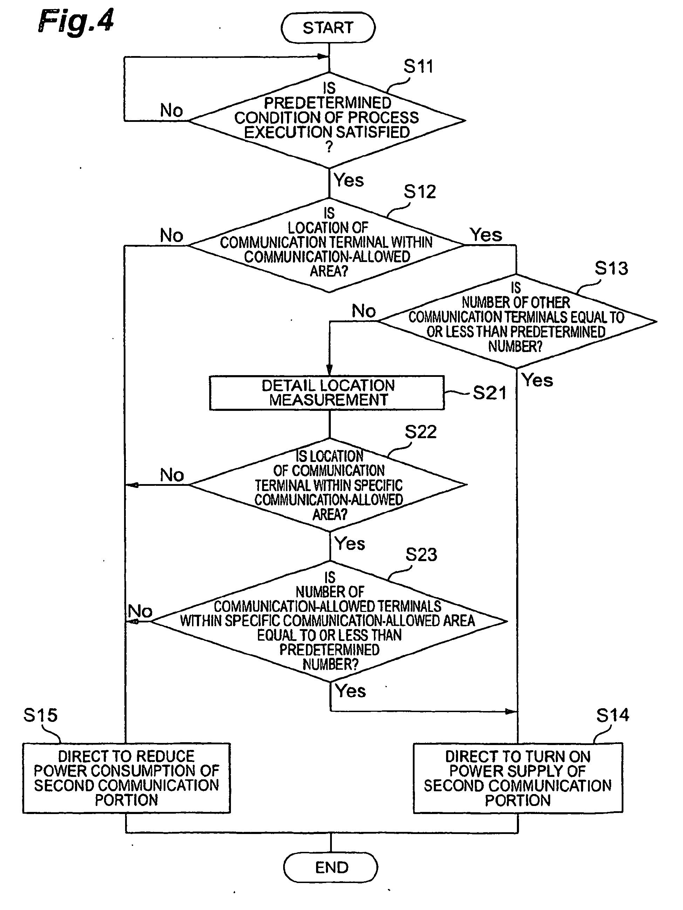

Next, a modification example of the operation of the remote control device 10 according to the embodiment of the present invention will be described with reference to the flow chart shown in Fig. 4. The present modification example differs from the remote control method shown in Fig. 3 in that the remote control device 10 executes the detail positioning of the communication terminal 20 and the process based on the positioning result in 521, S22, and 523.

In the present modification example, as in the remote control method shown in Fig. 3, the determination portion 15 of the remote control device 10 first determines whether or not the state of the communication terminal 20 satisfies the predetermined condition of process execution (S11). After S11, the determination portion 15 determines whether or not the current location of the communication terminal 20 is within the communication-allowed area (S12) and when the current location of the communication terminal 20 is within the communication-allowed area (when Yes in S12), the determination portion 15 determines whether the number of communication-allowed terminals is equal to or less than the first predetermined number, or greater than the first predetermined number (S13).

In the present modification example, when determining that the number of communication-allowed terminals is greater than the first predetermined number in S13 (when No in S 13), the determination portion 15 directs the positioning process portion 14 to execute the detail positioning by the multiple base stations positioning system using three or more base stations or the GPS system using the GPS positioning portion 23 of the communication terminal 20 (S21).

After the result of detail positioning by the positioning process portion 14 is obtained, the determination portion 15 determines whether or not the current location of the communication terminal 20 is within the specific communication-allowed area (for example, inside the specific communication-allowed areas S1 to S5) based on the location information stored in the area storage portion 13 (S22).

When determining that the current location of the communication terminal 20 is within the specific communication-allowed area (when Yes in S22), the determination portion 15 determines whether the number of communication-allowed terminals allowed to perform radio communication by the second communication system within the specific communication-allowed area is equal to or less than the second determined number, or greater than the second predetermined number (S23).

When determining that the number of communication-allowed terminals is equal to or less than the first predetermined number in S13 (when Yes in S 13), or when determining that the number of communication-allowed terminals is equal to or less than the second predetermined number in S23 (when Yes in S23), the determination portion 15 outputs the determination result to the effect that radio communication by the communication terminal 20 via the second communication portion 22 is allowed to the terminal power supply control portion 16 and the terminal power supply control portion 16 directs the communication terminal 20 to turn on the power supply of the second communication portion 22 (S 14), and terminates the process.

In addition, when determining that the current location of the communication terminal 20 is outside the communication-allowed area in S 12 (when No in S12), or when determining that the current location of the communication terminal 20 is outside the specific communication-allowed area in S22 (when No in S22), or when determining that the number of communication-allowed terminals is greater than the second predetermined number in S23 (when No in S23), the determination portion 15 outputs the determination result to the effect that radio communication by the communication terminal 20 via the second communication portion 22 is not allowed to the terminal power supply control portion 16 and the terminal power supply control portion 16 directs the communication terminal 20 to control the power supply so that the power consumption of the second communication portion 22 is reduced (S15), and terminates the process. In other words, when the determination portion 15 determines not to allow radio communication via the second communication portion 22, the terminal power supply control portion 16 controls to establish a state of less power consumption of the second communication portion 22.

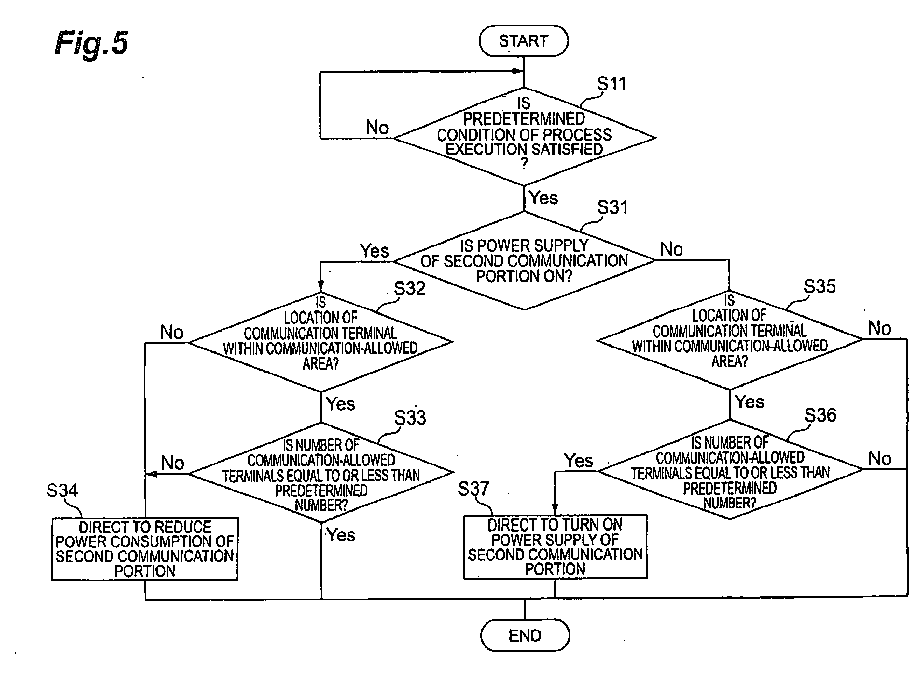

Next, another modification example of the operation of the remote control device 10 according to the embodiment of the present invention will be described with reference to the flow chart shown in Fig. 5. The present modification example differs from the remote control method shown in Fig. 3 in that a process based on the power supply state of the second communication portion 22 of the communication terminal 20 is executed in S31.

In the present modification example, as with the remote control method shown in Fig. 3, the determination portion 15 of the remote control device 10 first determines whether or not the state of the communication terminal 20 satisfies the predetermined condition of process execution (S11). After S11, based on the information obtained from the terminal power supply control portion 16, the determination portion 15 confirms whether or not the power supply state of the second communication portion 22 of the communication terminal is on (S31).

When the power supply state of the second communication portion 22 is on (when Yes in S31), as in S12 and S13 of the remote control method shown in Fig. 3, the determination portion 15 determines whether or not the current location of the communication terminal 20 is within the communication-allowed area (S32), and when the current location of the communication terminal 20 is within the communication-allowed area (when Yes in S32), the determination portion 15 determines whether the number of communication-allowed terminals is equal to or less than the first predetermined number, or greater than the first predetermined number (S33).

When determining that the number of communication-allowed terminals is equal to or less than the first predetermined number in S33 (when Yes in S33), the determination portion 15 makes a determination to the effect that radio communication by the communication terminal 20 via the second communication portion 22 is allowed and terminates the process without transmitting a control signal from the terminal power supply control portion 16 to the communication terminal 20.

In addition, when determining that the current location of the communication terminal 20 is outside the communication-allowed area in S32 (when No in S32) or when determining that the number of communication-allowed terminals is greater than the first predetermined number in S33 (when No in S33), the determination portion 15 outputs the determination result to the effect that radio communication by the communication terminal 20 via the second communication portion 22 is not allowed to the terminal power supply control portion 16 and the terminal power supply control portion 16 directs the communication terminal 20 to control the power supply so that the power consumption of the second communication portion 22 is reduced (S34), and terminates the process.

On the other hand, when the power supply state of the second communication portion 22 is other than the on state (that is, off or power saving mode) (when No in S31), as in S12 and S 13 of the remote control method shown in Fig. 3, the determination portion 15 determines whether or not the current location of the communication terminal 20 is within the communication-allowed area (S35), and when the current position of the communication terminal 20 is within the communication-allowed area (when Yes in S35), the determination portion 15 determines whether the number of communication-allowed terminals is equal to or less than the first predetermined number, or greater than the first predetermined number (S36).

When determining that the number of communication-allowed terminals is equal to or less than the first predetermined number in S36 (when Yes in S36), the determination portion 15 outputs the determination result to the effect that radio communication by the communication terminal 20 via the second communication portion 22 is allowed to the terminal power supply control portion 16 and the terminal power supply control portion 16 directs the communication terminal 20 to turn on the power supply of the second communication portion 22 (S37), and terminates the process.

In addition, when determining that the current location of the communication terminal 20 is outside the communication-allowed area in S35 (when No in S35), or when determining that the number of communication-allowed terminals is greater than the first predetermined number in S36 (when No in S36), the determination portion 15 makes a determination to the effect that radio communication by the communication terminal 20 via the second communication portion 22 is not allowed and terminates the process without transmitting a control signal from the terminal power supply control portion 16 to the communication terminal 20. In other words, when the determination portion 15 determines not to allow radio communication via the second communication portion 22, the terminal power supply control portion 16 controls to establish a state of less power consumption of the second communication portion 22. In this case, since the control signal is not transmitted to the communication terminal 20, it is possible to reduce the electric power consumed in the communication terminal 20 in order to process the received control signal. Due to this, the determination portion 15 can control the power supply of the communication terminal 20 so that the power consumption of the second communication portion 22 is reduced.

As with the case of the remote control method shown in Fig. 3, it may also be possible for the remote control device 10 to omit the determination process based on the number of communication-allowed terminals that are located within the communication-allowed area in S33 and S36 and execute the process in S34 or S37 in accordance with the determination result of the determination portion 15 immediately after the process in S32 and S35. In addition, when it is determined that the number of communication-allowed terminals is greater than the first predetermined number in S33 or 536, it may also be possible to execute a process relating to the detail positioning similar to that in S21 1 to S23 in Fig. 4.

The function and effect of the remote control device, the communication network system, and the remote control method according to the present embodiments described above will be described.

According to the above-mentioned embodiments, the determination process necessary to control the power supply of the communication means of the communication terminal is executed by the remote control device. Consequently, no load resulting from the determination process is generated in the mobile terminal. In addition, since it is not necessary for the communication terminal to execute the determination process, the communication terminal can have a simple configuration.

Specifically, the determination process necessary to control the power supply of the second communication portion 22 of the communication terminal is executed by the remote control device 10. Consequently, when the power supply of the second communication portion 22 is controlled in order to reduce the wasteful power consumption in the communication terminal 20, no load resulting from the determination process is imposed on the communication terminal 20. Further, since it is not necessary for the communication terminal 20 to execute the determination process, the communication terminal 20 can have a simple configuration.

In addition, it may also be possible to configure the terminal power supply control portion 16 so as to direct the communication terminal 20 to control the power supply so that the power consumption of the second communication portion 22 is reduced via the first communication portion 21 of the communication terminal 20 when the determination portion 15 determines not to allow radio communication via the second communication portion 22. With such a configuration, when the second communication portion 22 of the communication terminal 20 is controlled so that the power consumption is reduced, it is possible to reduce the power consumption of the second communication portion without imposing a particular load on the communication terminal.

Further, in the remote control device 10, it may also be possible to configure the terminal power supply control portion 16 so as to direct the communication terminal 20 to perform control to turn on the power supply of the second communication portion 22 via the first communication portion 21 of the communication terminal 20 when the determination portion 15 determines to allow radio communication via the second communication portion 22. With such a configuration, even when the second communication portion 22 is controlled so that its power consumption is reduced in order to reduce the wasteful power consumption in the communication terminal 20, it is possible to bring the power supply of the second communication portion 22 into the on state without imposing a particular load on the communication terminal 20.

In addition, in the remoter control device 10, it may also be possible to configure the determination portion 15 so as to allow radio communication via the second communication portion 22 when the location of the communication terminal is within a communication-allowed area where allows to perform radio communication via the second communication portion 22. With such a configuration, since it is possible to control the power supply depending on whether or not the communication terminal 20 is at a location where radio communication via the second communication portion 22 is available, more accurate control can be performed. In addition, since it is not necessary for the communication terminal 20 to store the communication-allowed area information, the communication terminal 20 can have a simple configuration.

In addition, it may also be possible to configure the determination portion 15 so as not to allow radio communication via the second communication portion 22 when the number of communication-allowed terminals that are allowed to perform radio communication by the second communication system in the communication-allowed area is greater than a first predetermined number. With such a configuration, it is possible to control the power supply of the second communication portion 22 in accordance with not only the location of the communication terminal 20 but also the number of communication-allowed terminals. For example, when communication is difficult due to the crowded radio waves because many communication-allowed terminals exist within the same communication-allowed area, it is possible to further reduce the wasteful power consumption by the communication terminal 20 by controlling the power supply of the second communication portion 22 of the communication terminal 20.

In addition, it may also be possible to configure the determination portion 15 so as not to allow radio communication via the second communication portion 22 when whether or not the location of the communication terminal 20 is within a specific communication-allowed area formed inside the communication-allowed area is determined and when the number of communication-allowed terminals that are located within the specific communication-allowed area is greater than a second predetermined number. With such a configuration, it is possible to control the power supply based on the detail determination based on the specific communication-allowed area narrower in the range than the communication-allowed area. Consequently, for example, even when the communication-allowed terminals gather in an unbalanced manner in a part of the communication-allowed area, it is possible to properly control the power supply of the second communication portion 22 of the communication terminal 20 by continuously turning on the power supply when the number of communication-allowed terminals within the specific communication-allowed area is small.

The communication network system 1 and the remote control method also have the technical features corresponding to those of the remote control device 10 and the similar function and effect.

The present invention is not limited to the above-described embodiments, but it is apparent that there can be various modifications within the scope of the attached claims.

Specifically, the location at which the remote control device 10 is provided is not limited in particular but the remote control device 10 may be provided between the access point control device 30 and the information communication network N. In addition, the remote control device 10 may be provided at a location connected only to the information communication network N not connected to neither of the base stations 60A to 60C nor the access point control device 30.

In addition, the second communication system is not limited to the "IEEE 802 11 a", "IEEE 802 11 b", and "IEEE 802. 11 g" shown as an example, but the present invention can also be applied to the case where the second communication system is the "WiMAX (IEEE 802 16a", "IEEE 802 20", "PHS (Personal Handyphone System)", or the like.

## Claims

1. A remote control device (10) adapted to remotely control a communication terminal (20) including a first communication means (21) for performing radio communication by a first communication system and a second communication means (22) for performing radio communication by a second communication system, the remote control device (10) comprising;
• a terminal location storage means (12) for storing terminal location information on a location of the communication terminal (20);
• an area storage means (13) for storing area information on a plurality of communication-allowed areas (R1, R2) where the communication terminal (20) is allowed to perform radio communication via the second communication means (22);
• a determination means (15) for determining whether or not to allow radio communication by the communication terminal (20) via the second communication means (22) based on the terminal location information stored in the terminal location storage means (12) and the area information stored in the area storage means (13); and
• a terminal power supply control means (16) for controlling the communication terminal (20) in order to establish a state wherein the second communication means (22) of the communication terminal (20) consumes less power when the determination means (15) determines not to allow radio communication via the second communication means (22);
• wherein the terminal power supply control means (16) directs the communication terminal (20) to control the power supply via the first communication means (21) of the communication terminal (20) so that power consumption of the second communication means (22) is reduced when the determination means (15) determines not to allow radio communication via the second communication means (22).

2. The remote control device (10) according to claim 1,
wherein the terminal power supply control means (16) is adapted to direct the communication terminal (20) to turn on the power supply of the second communication means (22) via the first communication means (21) of the communication terminal (20) when the determination means (15) determines to allow radio communication via the second communication means (22).

3. The remote control device (10) according to claim 1 or claim 2,
wherein the determination means (15) is adapted to allow radio communication via the second communication means (22) of the communication terminal (20) when the location of the communication terminal (20) is within a communication-allowed area (R1, R2) where the communication terminal (20) is allowed to perform radio communication via the second communication means (22).

4. The remote control device (10) according to claim 3,
wherein the determination means (15) is adapted to not allow the communication terminal (20) to perform radio communication via the second communication means (22) when the number of communication-allowed terminals (20) that are allowed to perform radio communication by the second communication system within the communication-allowed area (R1, R2), is greater than a first predetermined number.

5. The remote control device (10) according to claim 4,
wherein the determination means (15) is adapted to determine whether or not the location of the communication terminal (20) is within a specific communication-allowed area (S1, S2, S3, S4, S5, S6) formed inside the communication-allowed area (R1, R2) and is adapted to not allow radio communication via the second communication means (22) when the number of communication-allowed terminals (20) that are located within the specific communication-allowed area (S1, S2, S3, S4, S5) is greater than a second predetermined number.

6. A communication network system (1) comprising a plurality of communication terminals (20) and a remote control device (10) that is adapted to remotely control the plurality of communication terminals (20),
wherein a communication terminal (20) among the plurality of communication terminal includes:
• a first communication means (21) for performing radio communication by a first communication system; and
• a second communication means (22) for performing radio communication by a second communication system; and
wherein the remote control device (10) includes:
• a terminal location storage means (12) for storing terminal location information on a location of the communication terminal (20);
• an area storage means (13) for storing area information on a plurality of communication-allowed areas (R1, R2) where the communication terminal (20) is allowed to perform radio communication via the second communication means (22);
• a determination means (15) for determining whether or not to allow radio communication by the communication terminal (20) via the second communication means (22) based on the terminal location information stored in the terminal location storage means (12) and the area information stored in the area storage means (13) ; and
• a terminal power supply control means (16) for directing the communication terminal (20) to control the power supply via the first communication means (21) of the communication terminal (20) so that power consumption of the second communication means (22) is reduced when the determination means (15) determines not to allow radio communication via the second communication means (22).

7. A remote control method of remotely controlling a communication terminal (20) including a first communication means (21) for performing radio communication by a first communication system and a second communication means (22) for performing radio communication by a second communication system with a remote control device (10),
the remote control method comprising:
• storing terminal location information on a location of the communication terminal (20);
• storing area information on a plurality of communication-allowed areas (R1, R2) where the communication terminal (20) is allowed to perform radio communication via the second communication means (22);
• determining whether or not to allow radio communication by the communication terminal (20) via the second communication means (22) based on the stored terminal location information and the stored area information ; and
• directing the communication terminal (20) to control a power supply via the first communication means (21) of the communication terminal (20) so that power consumption of the second communication means (22) is reduced when it is determined that the radio communication via the second communication means (22) is not allowed.

## Patentansprüche

1. Eine Fernsteuervorrichtung (10), welche zum Fernsteuern eines Kommunikationsendgerätes (20) eingerichtet ist, welches ein erstes Kommunikationsmittel (21) zum Ausführen einer Funkkommunikation mittels eines ersten Kommunikationssystems und ein zweites Kommunikationsmittel (22) zum Ausführen einer Funkkommunikation mittels eines zweiten Kommunikationssystems aufweist, wobei die Fernsteuervorrichtung (10) aufweist:
ein Endgerätestandort-Speichermittel (12) zum Speichern einer Endgerätestandortinformation über einen Standort des Kommunikationsendgerätes (20);
ein Gebietsspeichermittel (13) zum Speichern einer Gebietsinformation über eine Mehrzahl von kommunikationszugelassenen Gebieten (R1, R2), in denen es dem Kommunikationsendgerät (20) erlaubt ist, eine Funkverbindung mittels des zweiten Kommunikationsmittels (22) auszuführen;
ein Bestimmungsmittel (15) zum Bestimmen, ob durch das Kommunikationsendgerät (20) eine Funkkommunikation mittels des zweiten Kommunikationsmittels (22) erlaubt sein soll oder nicht, basierend auf der Endgerätestandortinformation, welche in dem Endgeräte-Speichermittel (12) gespeichert ist, und auf der Gebietsinformation, welche in dem Gebietsspeichermittel (13) gespeichert ist; und
ein Endgeräteleistungsversorgungs-Steuerungsmittel (16) zum Steuern des Kommunikationsendgerätes (20), um einen Zustand herbeizuführen, in dem das zweite Kommunikationsmittel (22) des Kommunikationsendgerätes (20) weniger Leistung verbraucht wenn das Bestimmungsmittel (15) bestimmt, eine Funkkommunikation mittels des zweiten Kommunikationsmittels (22) nicht zu erlauben;
wobei das Endgeräteleistungsversorgungs-Steuerungsmittel (16) das Kommunikationsendgerät (20) anweist die Leistungsversorgung mittels des ersten Kommunikationsmittels (21) des Kommunikationsendgerätes (20) so zu steuern, dass der Leistungsverbrauch des zweiten Kommunikationsmittels (22) verringert wird, wenn das Bestimmungsmittel (15) bestimmt, dass eine Funkkommunikation mittels des zweiten Kommunikationsmittels (22) nicht erlaubt ist.

2. Fernsteuervorrichtung (10) gemäß Anspruch 1,
wobei das Endgeräteleistungsversorgungs-Steuerungsmittel (16) eingerichtet ist das Kommunikationsendgerät (20) anzuweisen die Leistungsversorgung des zweiten Kommunikationsmittels (22) mittels des ersten Kommunikationsmittels (21) des Kommunikationsendgerätes (20) einzuschalten, wenn das Bestimmungsmittel (15) bestimmt, dass eine Funkkommunikation mittels des zweiten Kommunikationsmittels 22 erlaubt ist.

3. Fernsteuervorrichtung (10) gemäß Anspruch 1 oder 2,
wobei das Bestimmungsmittel (15) eingerichtet ist, eine Funkkommunikation mittels des zweiten Kommunikationsmittels (22) des Kommunikationsendgerätes (20) zu erlauben, wenn der Standort des Kommunikationsendgerätes (20) innerhalb eines kommunikationszugelassenen Gebietes (R1, R2) liegt, in dem es dem Kommunikationsendgerät (20) erlaubt ist, eine Funkverbindung mittels des zweiten Kommunikationsmittels (22) auszuführen.

4. Fernsteuervorrichtung (10) gemäß Anspruch 3,wobei das Bestimmungsmittel (15) eingerichtet ist dem Kommunikationsendgerät (20) nicht zu erlauben eine Funkverbindung mittels des zweiten Kommunikationsmittels (22) auszuführen wenn die Zahl der kommunikationszugelassenen Endgeräte (20), welchen es erlaubt ist, eine Funkkommunikation durch das zweite Kommunikationssystem innerhalb des kommunikationszugelassenen Gebietes (R1, R2) auszuführen, größer ist als eine erste vorbestimmte Zahl.

5. Fernsteuervorrichtung (10) gemäß Anspruch 4,
wobei das Bestimmungsmittel (15) eingerichtet ist zu bestimmen, ob der Standort des Kommunikationsendgerätes (20) innerhalb eines innerhalb des kommunikationszugelassen Gebietes (R1, R2) gebildeten spezifischen kommunikationszugelassenen Gebietes (S1, S2, S3, S4, S5, S6) liegt, und eine Funkkommunikation mittels des zweiten Kommunikationsmittels (22) nicht zu erlauben, wenn die Zahl der kommunikationszugelassenen Endgeräte (20), welche sich innerhalb des spezifischen kommunikationszugelassenen Gebietes (S1, S2, S3, S4, S5, S6) befinden, größer ist als eine zweite vorbestimmte Zahl.

6. Ein Kommunikationsnetzwerksystem (1) aufweisend eine Mehrzahl von Kommunikationsendgeräten (20) und eine Fernsteuervorrichtung (10), welche eingerichtet ist die Mehrzahl von Kommunikationsendgeräten (20) fernzusteuern, wobei ein Kommunikationsendgerät (20) aus der Mehrzahl von Kommunikationsgeräten aufweist:
ein erstes Kommunikationsmittel (21) zum Ausführen einer Funkkommunikation durch ein erstes Kommunikationssystem; und
ein zweites Kommunikationsmittel (22) zum Ausführen einer Funkkommunikation durch ein zweites Kommunikationssystem; wobei die Fernsteuervorrichtung (10) aufweist:
ein Endgerätestandort-Speichermittel (12) zum Speichern einer Endgerätestandortinformation über einen Standort des Kommunikationsendgerätes (20);
ein Gebietsspeichermittel (13) zum Speichern einer Gebietsinformation über eine Mehrzahl von kommunikationszugelassenen Gebieten (R1, R2), in denen es dem Kommunikationsendgerät (20) erlaubt ist, eine Funkverbindung mittels des zweiten Kommunikationsmittels (22) auszuführen;
ein Bestimmungsmittel (15) zum Bestimmen, ob durch das Kommunikationsendgerät (20) eine Funkkommunikation mittels des zweiten Kommunikationsmittels (22) erlaubt sein soll oder nicht, basierend auf der Endgerätestandortinformation, welche in dem Endgeräte-Speichermittel (12) gespeichert ist, und auf der Gebietsinformation, welche in dem Gebietsspeichermittel (13) gespeichert ist; und
ein Endgeräteleistungsversorgungs-Steuerungsmittel (16) zum Anweisen des Kommunikationsendgerätes (20) die Leistungsversorgung mittels des ersten Kommunikationsmittels (21) des Kommunikationsendgerätes (20) so zu steuern, dass der Leistungsverbrauch des zweiten Kommunikationsmittels (22) verringert wird wenn das Bestimmungsmittel (15) bestimmt, dass eine Funkkommunikation mittels des zweiten Kommunikationsmittels (22) nicht erlaubt ist.

7. Ein Fernsteuerungsverfahren zum Fernsteuern eines Kommunikationsendgerätes (20), welches ein erstes Kommunikationsmittel (21) zum Ausführen einer Funkkommunikation durch ein erstes Kommunikationssystem und ein zweites Kommunikationsmittel (22) zum Ausführen einer Funkkommunikation durch ein zweites Kommunikationssystem mit einer Fernsteuervorrichtung aufweist, wobei das Fernsteuerungsverfahren aufweist:
Speichern einer Endgerätestandortinformation über einen Standort des Kommunikationsendgerätes (20);
Speichern einer Gebietsinformation über eine Mehrzahl von kommunikationszugelassenen Gebieten (R1, R2), in denen es dem Kommunikationsendgerät (20) erlaubt ist, eine Funkverbindung mittels des zweiten Kommunikationsmittels (22) auszuführen;
Bestimmen, ob durch das Kommunikationsendgerät (20) eine Funkkommunikation mittels des zweiten Kommunikationsmittels (22) erlaubt sein soll basierend auf der gespeicherten Endgerätestandortinformation der gespeicherten Gebietsinformation; und
Anweisen des Kommunikationsendgerätes (20) zum Steuern der Leistungsversorgung mittels des ersten Kommunikationsmittels (20) des Kommunikationsendgerätes (20) derart, dass der Leistungsverbrauch des zweiten Kommunikationsmittels (22) verringert wird, wenn bestimmt wird, dass die Funkkommunikation mittels des zweiten Kommunikationsmittels (22) nicht erlaubt ist.

## Revendications

1. Dispositif de commande à distance (10) adapté pour commander à distance un terminal de communication (20) incluant un premier moyen de communication (21) pour exécuter une communication radio à l'aide d'un premier système de communication et d'un second moyen de communication (22) pour exécuter une communication radio à l'aide d'un second système de communication, le dispositif de commande à distance (10) comprenant :
- un moyen de stockage d'emplacement de terminal (12) pour stocker des informations d'emplacement de terminal à propos de l'emplacement du terminal de communication (20) ;
- un moyen de stockage de zone (13) pour stocker des informations de zone à propos d'une pluralité de zones où les communications sont autorisées (R1, R2) où le terminal de communication (20) est autorisé à exécuter une communication radio via le second moyen de communication (22) ;
- un moyen de détermination (15) pour déterminer s'il convient ou non d'autoriser une communication radio à l'aide du terminal de communication (20) via le second moyen de communication (22) sur la base des informations d'emplacement de terminal stockées dans le moyen de stockage d'emplacement de terminal (12) et des informations de zone stockées dans le moyen de stockage de zone (13) ; et
- un moyen de commande d'alimentation de terminal (16) pour commander le terminal de communication (20) afin d'établir un état dans lequel le second moyen de communication (22) du terminal de communication (20) consomme moins de puissance lorsque le moyen de détermination (15) détermine qu'il convient de ne pas autoriser une communication radio via le second moyen de communication (22) ;
- dans lequel le moyen de commande d'alimentation de terminal (16) amène le terminal de communication (20) à commander l'alimentation via le premier moyen de communication (21) du terminal de communication (20) de sorte que la consommation de puissance du second moyen de communication (22) est réduite lorsque le moyen de détermination (15) détermine qu'il convient de ne pas autoriser une communication radio via le second moyen de communication (22).

2. Dispositif de commande à distance (10) selon la revendication 1,
dans lequel le moyen de commande d'alimentation de terminal (16) est adapté pour amener le terminal de communication (20) à mettre en service l'alimentation du second moyen de communication (22) via le premier moyen de communication (21) du terminal de communication (20) lorsque le moyen de détermination (15) détermine qu'il convient d'autoriser une communication radio via le second moyen de communication (22).

3. Dispositif de commande à distance (10) selon la revendication 1 ou la revendication 2,
dans lequel le moyen de détermination (15) est adapté pour autoriser une communication radio via le second moyen de communication (22) du terminal de communication (20) lorsque l'emplacement du terminal de communication (20) se situe à l'intérieur d'une zone où les communications sont autorisées (R1, R2) où le terminal de communication (20) est autorisé à exécuter une communication radio via le second moyen de communication (22).

4. Dispositif de commande à distance (10) selon la revendication 3,
dans lequel le moyen de détermination (15) est adapté pour ne pas autoriser le terminal de communication (20) à exécuter une communication radio via le second moyen de communication (22) lorsque le nombre de terminaux autorisés à exécuter une communication (20) qui sont autorisés à exécuter une communication radio à l'aide du second système de communication à l'intérieur de la zone où les communications sont autorisées (R1, R2), est supérieur à un premier nombre prédéterminé.

5. Dispositif de commande à distance (10) selon la revendication 4,
dans lequel le moyen de détermination (15) est adapté pour déterminer si oui ou non l'emplacement du terminal de communication (20) se situe à l'intérieur d'une zone spécifique où les communications sont autorisées (S1, S2, S3, S4, S5, S6) formée à l'intérieur de la zone où les communications sont autorisées (R1, R2), et est adapté pour ne pas autoriser une communication radio via le second moyen de communication (22) lorsque le nombre de terminaux autorisés à exécuter une communication (20) qui se situent à l'intérieur de la zone spécifique où les communications sont autorisées (S1, S2, S3, S4, S5) est supérieur à un second nombre prédéterminé.

6. Système de réseau de communication (1) comprenant une pluralité des terminaux de communication (20) et un dispositif de commande à distance (10) qui est adapté pour commander à distance la pluralité des terminaux de communication (20),
dans lequel un terminal de communication (20) de la pluralité des terminaux de communication (20) inclut :
- un premier moyen de communication (21) pour exécuter une communication radio à l'aide d'un premier système de communication ; et
- un second moyen de communication (22) pour exécuter une communication radio à l'aide d'un second système de communication ; et
dans lequel le dispositif de commande à distance (10) inclut :
- un moyen de stockage d'emplacement de terminal (12) pour stocker des informations d'emplacement de terminal à propos de l'emplacement du terminal de communication (20) ;
- un moyen de stockage de zone (13) pour stocker des informations de zone à propos d'une pluralité de zones où les communications sont autorisées (R1, R2) où le terminal de communication (20) est autorisé à exécuter une communication radio via le second moyen de communication (22) ;
- un moyen de détermination (15) pour déterminer si oui ou non il convient d'autoriser une communication radio à l'aide du terminal de communication (20) via le second moyen de communication (22) sur la base des informations d'emplacement de terminal stockées dans le moyen de stockage d'emplacement de terminal (12) et des informations de zone stockées dans le moyen de stockage de zone (13) ; et
- un moyen de commande d'alimentation de terminal (16) pour amener le terminal de communication (20) à commander l'alimentation via le premier moyen de communication (21) du terminal de communication (20) de sorte que la consommation de puissance du second moyen de communication (22) est réduite lorsque le moyen de détermination (15) détermine qu'il convient de ne pas autoriser une communication radio via le second moyen de communication (22).

7. Procédé de commande à distance pour commander à distance un terminal de communication (20) incluant un premier moyen de communication (21) pour exécuter une communication radio à l'aide d'un premier système de communication et un second moyen de communication (22) pour exécuter une communication radio à l'aide d'un second système de communication avec un dispositif de commande à distance (10),
le procédé de commande à distance comprenant les étapes consistant à :
- stocker des informations d'emplacement de terminal à propos de l'emplacement du terminal de communication (20) ;
- stocker des informations de zone à propos d'une pluralité de zones où les communications sont autorisées (R1, R2) où le terminal de communication (20) est autorisé à exécuter une communication radio via le second moyen de communication (22) ;
- déterminer s'il convient oui ou non d'autoriser une communication radio à l'aide du terminal de communication (20) via le second moyen de communication (22) sur la base des informations d'emplacement de terminal stockées et des informations de zone stockées ; et
- amener le terminal de communication (20) à commander l'alimentation via le premier moyen de communication (21) du terminal de communication (20) de sorte que la consommation de puissance du second moyen de communication (22) est réduite lorsqu'il est déterminé qu'une communication radio via le second moyen de communication (22) n'est pas autorisée.
